(19) Europäisches Patentamt
European Patent Office
Office européen des brevets

(11) Veröffentlichungsnummer: **0 339 400 B1**

# (12) EUROPÄISCHE PATENTSCHRIFT

(45) Veröffentlichungstag der Patentschrift:
**21.11.91 Patentblatt 91/47**

(51) Int. Cl.$^5$: **G06K 17/00, B65G 1/04**

(21) Anmeldenummer: **89106725.8**

(22) Anmeldetag: **14.04.89**

---

(54) **Papierverteilungsvorrichtung.**

---

(30) Priorität: **28.04.88 PCT/DE88/00255**

(43) Veröffentlichungstag der Anmeldung:
**02.11.89 Patentblatt 89/44**

(45) Bekanntmachung des Hinweises auf die
Patenterteilung:
**21.11.91 Patentblatt 91/47**

(84) Benannte Vertragsstaaten:
**AT BE CH DE ES FR GB GR IT LI LU NL SE**

(56) Entgegenhaltungen:
**EP-A- 0 119 402
EP-A- 0 156 953
DE-A- 3 048 346
FR-A- 2 451 884**

(73) Patentinhaber: **Oertzen, Ralf
Föhrenweg 18
W-2093 Stelle/Ashausen (DE)**

(72) Erfinder: **Oertzen, Ralf
Föhrenweg 18
W-2093 Stelle/Ashausen (DE)**

(74) Vertreter: **UEXKÜLL & STOLBERG
Patentanwälte
Beselerstrasse 4
W-2000 Hamburg 52 (DE)**

---

## Beschreibung

Die Erfindung betrifft eine Papierverteilungsvorrichtung für das automatische Ablegen von Papierstapeln in einzelnen Fächern eines Regals, mit mindestens einem Förderband, einem Handhabungsautomaten und einer elektronischen Steuerung.

Elektronische Datenverarbeitungs-Systeme sind aus Produktion und Verwaltung heute nicht mehr wegzudenken. Die stetige Zunahme an Daten verursacht dabei aber zwangsläufig auch einen wachsenden Papier-Ausstoß. Dieser Papier-Ausstoß ist umso größer, je größer die verwendeten Rechenanlagen sind und je länger deren Betrieb erfolgt. Aus Gründen der Wirtschaftlichkeit sind Großrechenanlagen in öffentlichen Institutionen, privaten Dienstleistungsbetrieben oder großen Versicherungs- und Wirtschaftsunternehmen rund um die Uhr im Einsatz. Obgleich die Hard- und Software bis zu diesem Punkt gemeinsam arbeiten, erfolgt die Papiernachbearbeitung oder Verteilung in aller Regel immer noch manuell. Da das Sortieren, Zuordnen, Verteilen und Lagern der auf Papier vorliegenden Ergebnisse von Menschen erfolgen muß, wird ein Großteil jeder EDV-Zeitersparnis praktisch wieder zunichte gemacht. Die manuelle Handhabung der EDV-Ausdrucke enthält außerdem ein hohe Fehlerquote, denn selbst bei einfachsten Sortierarbeiten großer Beleg-Mengen kann nachlassende Konzentration zu folgenschweren Fehlern führen. Etwa dann, wenn persönliche Daten an falsche Empfänger übermittelt werden.

Aus der EP-A-0156953 ist eine Kommissioniereinrichtung für Tüten, die in einer Kiste gelagert sind, bekannt, bei der die zu kommissionierenden Güter mit einer maschinell lesbaren Codierung versehen sind. Ein Roboter ergreift die Güter und schwenkt sie vor eine Codeleseeinrichtung, die die Zieladresse ermittelt.

Es ist Aufgabe der Erfindung, eine automatisch arbeitende Off-Line-Papierverteilungsvorrichtung zu schaffen, die ausgedruckte Daten schnell, rationell, effizient und fehlerlos an vorgegebenen Stellen ablegt.

Zur Lösung dieser Aufgabe dient eine Papierverteilungsvorrichtung für das automatische Ablegen von Papierstapeln in einzelnen Fächern eines Regals, die mindestens ein Förderband, einen Handhabungsautomaten und eine elektronische Steuerung aufweist. Sie ist dadurch gekennzeichnet, daß an das mindestens eine Förderband eine Zuführstation anschließt, in der einzelne Papierbögen oder am Rand verklebte Papierstapel als vom Förderband zugeführte Stapel ablegbar sind ; daß ein am Handhabungsautomaten angeordneter Greifer an das Ende der Zuführstation elektronisch gesteuert positionierbar ist ; daß der Greifer eine Zange zum Erfassen und Übernehmen einzelner Papierblätter oder Papierstapel von der Zuführstation aufweist ; daß der Greifer ferner mit einem Lichttaster zur Ermittlung der 0 Beschickung jedes angesteuerten Regalfaches versehen ist ; daß der Greifer mit einem Antrieb zum Drehen der Zange um 180° versehen ist, wobei das Umdrehen der Zange bei der Übertragung von der Zuführstation zu einem Regalfach erfolgt ; daß der Handhabungsautomat entlang dem Regal automatisch gesteuert verfahrbar ist ; 5 daß der Greifer an dem Handhabungsautomaten auf und ab bewegbar ist und daß die Zange des Greifers durch eine automatische elektronische Steuerung in die Regelfächer hinein und aus diesen heraus bewegt werden kann.

Dadurch wird erreicht, daß für jeden Auftrag ein zugeordneter Papierstapel aus verklebten oder unverklebten Blättern von dem Drucker einer EDV-Anlage auf der Zuführkette der Zuführstation ablegbar ist. Die Zuführkette läuft in einem Tisch, dessen freies, vorderes Ende eine Übergabestation bildet, mit der die Zange des Greifers zusammenwirken kann. Der Greifer besitzt eine feststehende obere Backe und eine gegen die feststehende Backe bewegbare untere Backe, die unter den Papierstapel greift und diesen nach oben gegen die obere Backe anhebt und festklemmt. Im folgenden wird allgemein von "Papierstapeln" gesprochen, und zwar unabhängig davon, ob diese 1 Blatt oder beispielsweise 1000 Blatt enthalten. Der so vom Greifer erfaßte Papierstapel wird durch Zurückziehen des Greifers von der Zuführkette abgenommen, um zu einem bestimmten, dem Auftraggeber zugeordneten Regalfach übertragen zu werden. Die Positionierung des Greifers an dem vorgegebenen Regalfach erfolgt dadurch, daß der Handhabungsautomat an die jeweilige senkrechte Stelle des Regalfachs gefahren und gleichzeitig oder anschließend der Greifer am Handhabungsautomaten auf die Höhe des vorgegebenen Regalfachs bewegt wird. Die Steuerung dieser Bewegungen erfolgt über einen Rechner in an sich bekannter Weise und mit dem Fachmann geläufigen Mitteln wie Schrittschaltmotoren etc.. Auf dem Weg von der Abnahme des Papierstapels von der Zuführstation zur Ablage in dem Regalfach wird der Greifer um 180° gedreht, so daß die feststehende obere Backe nunmehr unten liegt und mit ihrer Oberseite nach unten zeigt. Diese Drehung erfolgt deswegen, weil die obere Backe die Bezugsfläche darstellt, auf die die Programmsteuerung des Bewegungsablaufs ausgerichtet ist.

Gemäß Erfindung ist in der Oberseite der oberen Backe ein Lichttaster vorgesehen, der bei der Bewegung des Greifers in ein Regalfach den darunter liegenden Bereich abtastet und damit feststellt, wie weit der Greifer in dem angesteuerten Regalfach abgesenkt werden kann, ehe das Ablegen des Papierstapels erfolgen soll. In diesem Zusammenhang wird darauf hingewiesen, daß ein zweckmäßiges Steuerungsprogramm für die erfindungsgemäße Papierverteilungsvorrichtung stets darüber Information speichert, bis zu welcher Höhe die einzelnen Regalfächer mit Papier gefüllt sind. Da dem Greifer bei der Annäherung an ein Regalfach diese

2

Information zur Verfügung gestellt wird, wird sichergestellt, daß die Zange des Greifers nicht zu tief in ein Regalfach hineinfährt und damit bereits abgelegtes Papier ausstößt. Sollte allerdings in der Zwischenzeit Papier von Hand entnommen worden sein, was von dem Steuerprogramm nicht erfaßt wird, also wenn die tatsächliche Beladungshöhe eines Regalfaches geringer als die gespeicherte Beladungshöhe ist, dann erfolgt in Nachsteuerung durch vom Lichttaster aufgenommene Signale ein weiteres Absenken des Greifers auf eine zum Ablegen zweckmäßige Höhe. Auf diese Weise fällt der Papierstapel beim Öffnen der Zange nicht aus dem Greifer heraus, sondern wird wenige Millimeter über der jeweils zur Verfügung stehenden Auflagefläche angelegt und nach dem Öffnen der Zange von einem Ejektor in dieser Lage gehalten, während die obere und untere Backe der Zange aus dem Regalfach zurückgezogen wird. Dabei erfolgt also eine Relativbewegung zwischen Ejektor und Zange, wobei der Ejektor raumfest stehenbleibt, während die Zange zurückgezogen wird.

Vorteilhafte Ausgestaltung der Erfindung ergeben sich aus den Unteransprüchen und der nachfolgenden Figurenbeschreibung.

Die Erfindung wird im folgenden anhand eines Ausführungsbeispiels näher erläutert ; es zeigen :

| | |
|---|---|
| FIGUR 1 | eine perspektivische Schemadarstellung eines Teiles des Ausführungsbeispiels ; |
| FIGUR 2 | eine perspektivische Darstellung des Bogenanlegers des Ausführungsbeispiels von FIGUR 1 ; |
| FIGUR 3 | einen Teil der Zuführstation, der die Verbindung vom Bogenanleger nach FIGUR 2 zu dem in FIGUR 1 dargestellten Greifer bildet ; |
| FIGUR 4 | eine Darstellung des Handhabungsautomaten mit dem Greifer, wobei das in FIGUR 1 erkennbare Regal links angeordnet wäre und der Handhabungsautomat aus der Zeichenebene nach vorn verfahren werden kann ; |
| FIGUR 5 | eine Stirnansicht des Handhabungsautomaten von FIGUR 4 in Richtung des Pfeils V gesehen ; |
| FIGUR 6 | Einzelheiten des Greifers aus FIGUR 1 ; |
| FIGUR 7 | eine schematische Seitenansicht des Greifers von FIGUR 6 ; |
| FIGUR 8 | eine vergrößerte Ausschnittsansicht auf den Greifer von FIGUR 6 in Richtung des Pfeils VIII gesehen ; |
| FIGUR 9 | eine vergrößerte Teildarstellung des Greifers von FIGUR 4 in Richtung des Pfeils IX von FIGUR 6 gesehen ; und |
| FIGUR 10 | eine perspektivische Draufsicht auf das Vorderende der Zuführstation von FIGUR 3, und zwar des rechten Teils von FIGUR 3 von schräg oben gesehen unter Darstellung des Greifers von FIGUR 6. |

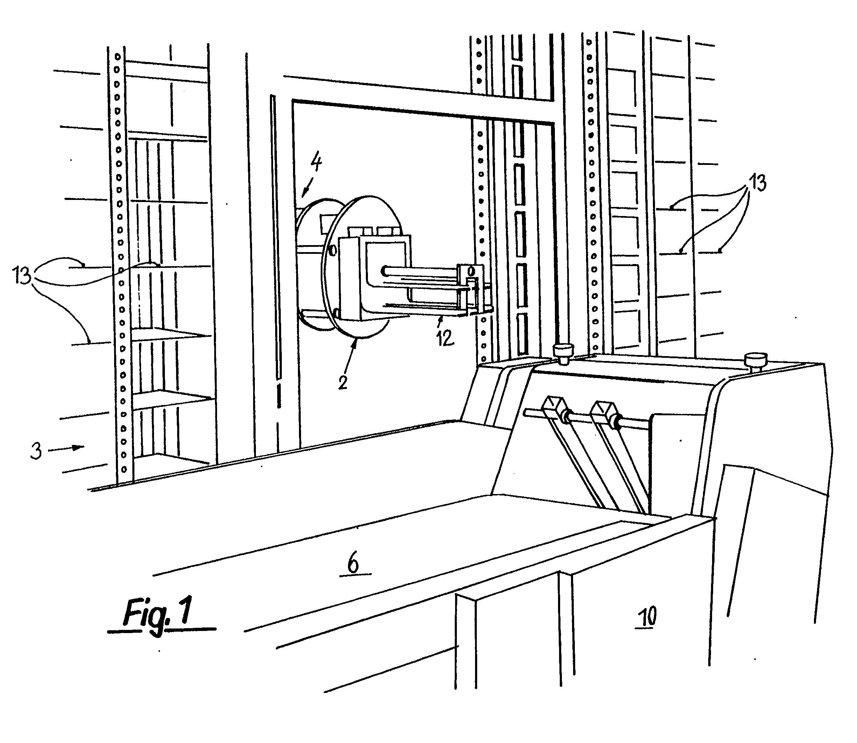

In den Figuren sind gleiche Teile durchwegs mit gleichen Bezugszeichen versehen. FIGUR 1 zeigt die erfindungsgemäße Vorrichtung in perspektivischer Darstellung, wobei aus Gründen der Übersichtlichkeit nur ein Teil dargestellt ist. Man erkennt in dieser FIGUR die Anordnung eines Bogenanlegers 1, an dem ein Förderband 6 für die Zufuhr der von einer nicht dargestellten EDV-Anlage ausgedruckten Papierbögen zu einem Greifer 2 angebracht ist, der diese in Regalfächern 13 eines Regals 3 ablegt. Die Darstellung von FIGUR 1 dient im wesentlichen zur Erläuterung der Zuordnung von Greifer 2, Regal 3 und Bogenanleger 1.

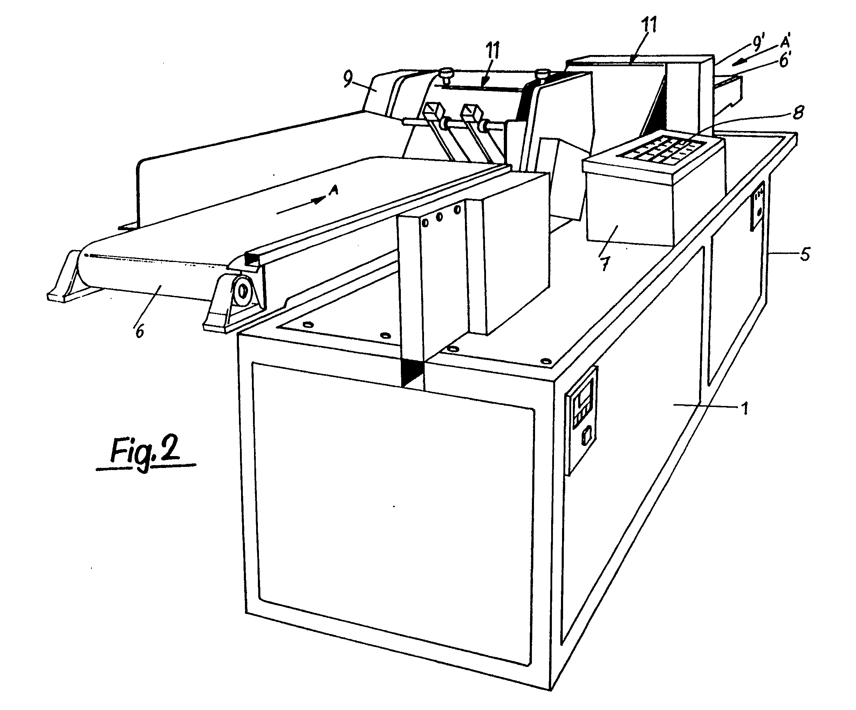

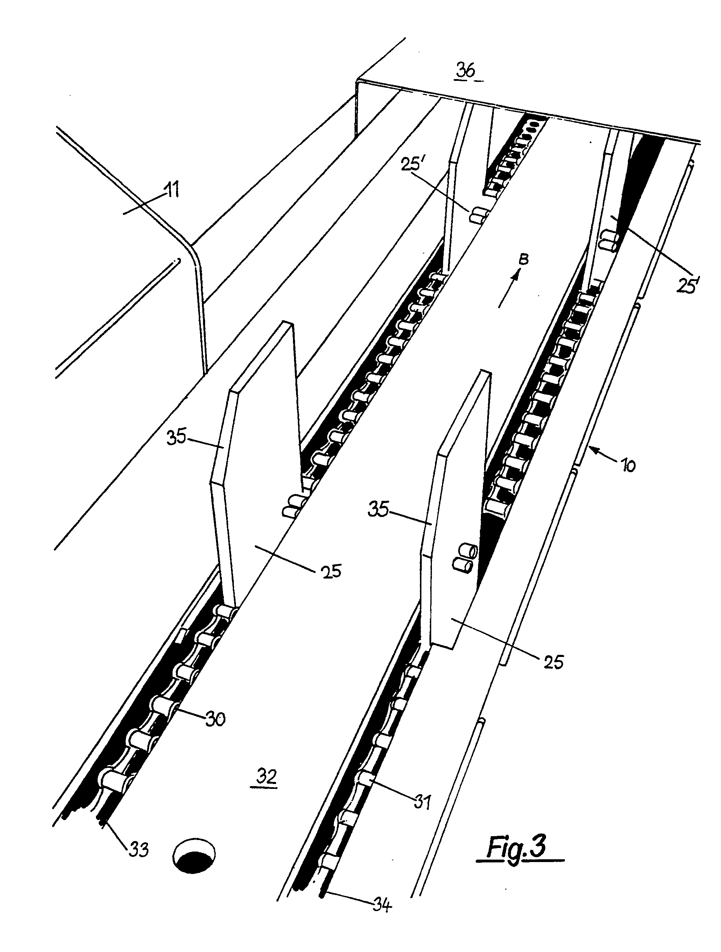

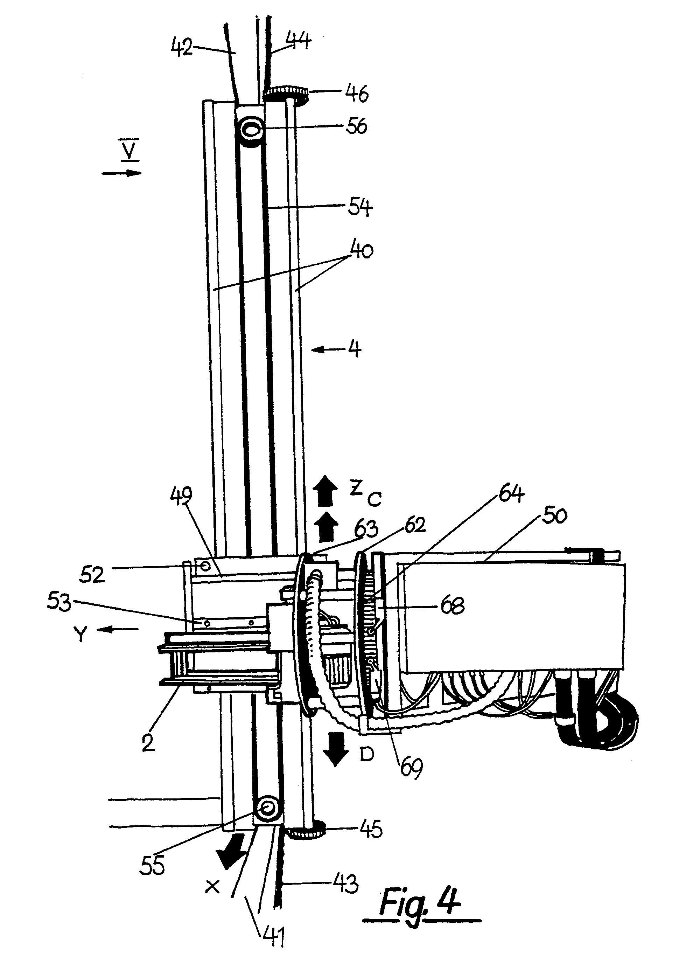

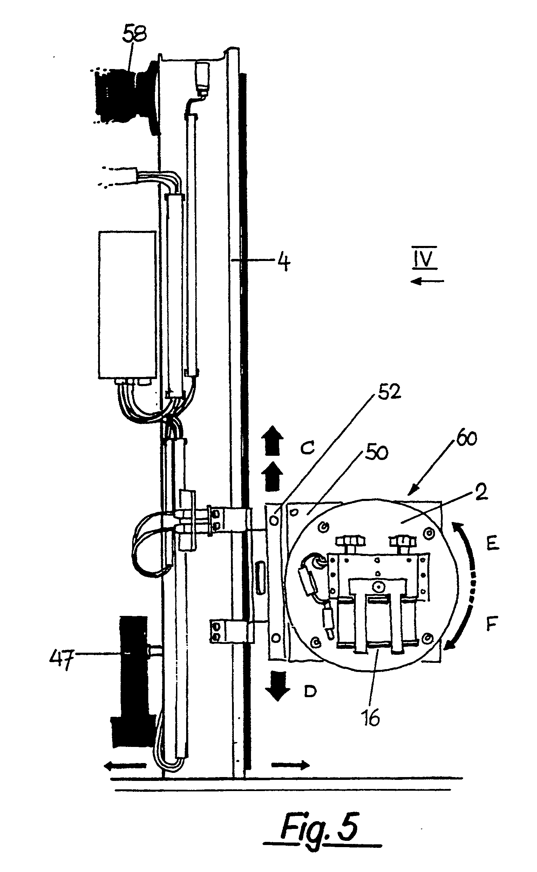

In FIGUR 2 ist der Bogenanleger 1 in Einzelheiten dargestellt. Er ist im wesentlichen aus einem tischartigen Rahmen 5 gebildet, auf dem ein Steuerpult 7 angeordnet ist, das eine Anzahl von Steuertastern 8 für die Eingabe von Steuerbefehlen in eine elektronische Steuerung aufweist. Auf dem Tisch sind ferner zwei Förderbänder 6 und 6' montiert, die symmetrisch aufgebaut sind und auf denen einzelne Blätter geschuppt abgelegt werden. Diese bedruckten Blätter oder Bögen werden in Richtung der Pfeile A und A' zur Mitte des Bogenanlegers 1 gefördert. Am Ende der Förderbänder 6 und 6' gleiten die Papierbögen in je eine Vereinzelungsvorrichtung 9 bzw. 9', in denen sie auf an sich bekannte Weise durch Reibräder, gegenläufige Rollen, gewichtsbelastete Schwenkhebel oder ähnliche Einrichtungen derart vereinzelt werden, daß der Rand jedes Papierbogens von einer nicht dargestellten Leseeinrichtung in einer Lesestation 11 ungehindert abgetastet werden kann. Zur Steuerung der erfindungsgemäßen Vorrichtung ist nämlich auf jeden Bogen Papier vom Drucker der EDV-Anlage ein Strichcode aufgedruckt, der in der Lesestation 11 von einem Laserstrahl vierhundertmal in der Sekunde abgetastet wird. Die in der Lesestation 11 gewonnenen Abtastsignale dienen zur Steuerung der erfindungsgemäßen Vorrichtung, und zwar beispielsweise bleibt eine in FIGUR 3 dargestellte Zuführkette 30, 31 so lange stehen, solange der gleiche Strichcode gelesen wird. Erst wenn ein anderer Strichcode erkannt wird, transportiert die Zuführkette 30, 31 die abgelegten Papierbögen weiter, so daß Blätter eines neuen Auftrags an einer anderen Stelle der Zuführkette 30, 31 abgelegt werden und somit einen neuen Stapel bilden. Die von der Lesestation 11 gewonnenen Signale werden auch dazu verwendet, den Handhabungsautomaten 4 von FIGUR 4 und 5 mit dem Greifer 2 zu steuern, damit der Papierstapel in einem bestimmten vorgegebenen Regalfach 13 abgelegt wird.

Es wird darauf hingewiesen, daß bei der Verarbeitung verklebter Papierstapel natürlich keine Vereinzelung erforderlich ist. Die Vereinzelungsvorrichtung 9, 9' wäre dann auszuschalten oder anders zu steuern.

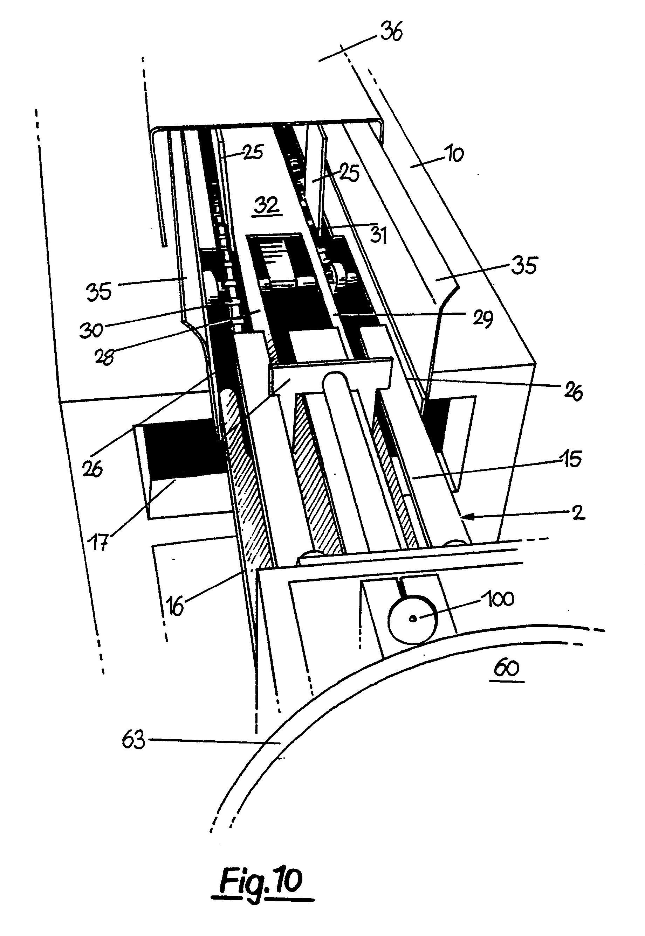

FIGUR 3 zeigt einen Ausschnitt der bereits erwähnten Zuführstation 10, auf der die einzelnen Papierstapel nach dem Durchlaufen der Lesestation 11 nacheinander abgelegt werden. In FIGUR 3 ist nur die linke Lesestation 11 angedeutet, da es im wesentlichen darum geht, die Zuführkette zu verdeutlichen. Diese besteht aus zwei zueinander parallelen endlosen Ketten 30 und 31, die unter der Oberfläche eines Tisches 32 in Schlitzen 33 und 34 geführt sind. In bestimmten Abständen sind etwa rechteckförmige Transportstücke 25 in die Ketten 30 und 31 eingesetzt, die aus den Schlitzen 33 und 34 nach oben ragen und etwas höher als der höchste zu transportierende Papierstapel sind. Die Bewegungsrichtung der Ketten 30 und 31 verläuft in Richtung des Pfeils B und damit in Richtung auf das in FIGUR 10 dargestellte Übergabeende der Zuführstation 10. Der Abstand zweier benachbarter Transportstücke 25, 25' in einer Kette 30 oder 31 ist so bemessen, daß dazwischen das längste zu verarbeitende Papierformat ohne Schwierigkeiten abgelegt werden kann. Wenn es also darum geht, lediglich Papierbögen des Formats DIN A4 zu verarbeiten, so beträgt der Abstand zweier Transportstücke 25, 25' in der Kette 30 bzw. 31 etwa 30 bis 35 cm. Zum leichteren Ablegen der einzelnen Papierbögen auf der Zuführkette sind im übrigen die in Förderrichtung hinteren, oberen Ecken der Transportstücke 25, 25' abgeschrägt, wie dies bei 35 erkennbar ist.

Im Abstand zur Lesestation 11 sind die Ketten 30, 31 mit ihren Transportstücken 25, 25' im übrigen durch eine Abdeckung 36 umhüllt, die eine Verletzungsgefahr bei unaufmerksamer Annäherung der Hand einer Bedienungsperson verhindern soll. Dadurch laufen die einzelnen Papierstapel von der Lesestation 11 unter die Abdeckung 36 und treten erst am Übergabeende der Zuführstation 10 gemäß FIGUR 10 wieder ins Freie.

FIGUR 4 zeigt den Handhabungsautomaten 4, der in FIGUR 1 hinter dem Regal 3 angeordnet ist, und parallel dazu verfahren werden kann. Zu diesem Zweck ist der Handhabungsautomat 4 in einer unteren Schiene 41 und einer oberen Schiene 42 geführt. Die untere Schiene 41 ist auf dem Boden oder dem Fundament der erfindungsgemäßen Papierverteilungsvorrichtung verlegt und befestigt, während die obere Schiene 42 entweder unmittelbar an der Gebäudedecke oder an einer Zwischenkonstruktion angebracht ist. Es ist klar, daß die Schienen 41 und 42 parallel zu dem Regal 3 verlaufen, um den Handhabungsautomaten 4 parallel zu dem Regal 3 fahren lassen zu können. An den Schienen 41 und 42 sind seitlich Zahnstangen 43 und 44 angebracht, die mit Zahnrädern 45 und 46 des Handhabungsautomaten 4 kämmen. In einer Ausführungsform sind die Zahnräder 45 und 46 an den Enden einer gemeinsamen Welle befestigt, so daß sie von einem ersten Motor 47 gemeinsam gedreht werden. Wie der Antrieb der beiden Zahnräder 45 und 46 vorzunehmen ist, so daß dieser gemeinsame Antrieb erfolgt, ist dem Fachmann geläufig. Es wird darauf hingewiesen, daß zu diesem Zweck die das eine Zahnrad 45 mit dem anderen Zahnrad 46 koppelnde Welle nicht durchgehend zu sein braucht, sondern aus zwei Teilwellen bestehen kann, die auf irgendeine an sich bekannte Weise kraftschlüssig miteinander gekoppelt sind. Hierzu sind Zahn- oder Kettentriebe geeignet.

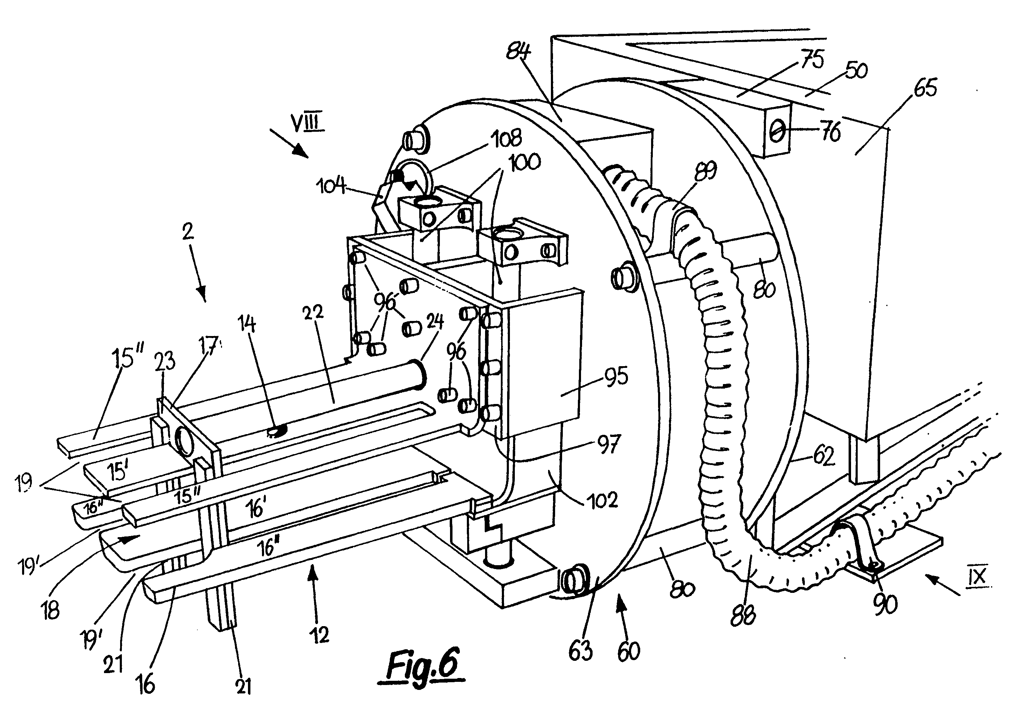

FIGUR 4 zeigt außerdem schematisch zwei sich am Handhabungsautomaten 4 von unten nach oben erstreckende Führungsstangen 40, an denen der Greifer 2 mit seinen zugehörigen Motoren, Schaltern und Betätigungsgliedern auf und ab bewegt werden kann. Diese Bewegung ist durch die Pfeile C und D angedeutet. Einzelheiten des Greifers 2 sind in den FIGUREn 6 bis 9 dargestellt.

Die Auf- und Abbewegbarkeit des Greifers 2 ist in FIGUR 5 ebenfalls deutlich zu erkennen, denn in dieser FIGUR ist der Handhabungsautomat 4 in der Ansicht dargestellt, wie dies in Transportrichtung B in der Zuführstation 10 nach FIGUR 3 gesehen wird. Man erkennt also anhand der FIGUREn 4 und 5, daß der Greifer 2 ein Traggestell 50 aufweist, das an einem Schlitten 52 angebracht ist. Der Schlitten 52 gleitet auf den Führungsstangen 40 des Handhabungsautomaten 4 und ist durch eine Kette 54 in Richtung der Pfeile C und D auf und ab bewegbar. Die Kette 54 läuft um ein unteres Kettenrad 55 und um ein oberes Kettenrad 56, von denen letzteres durch einen zweiten Motor 58 angetrieben wird (FIGUR 5). Das untere Kettenrad 55 läuft hingegen frei. Die Kettenräder 55 und 56 sind in einem solchen Abstand am Handhabungsautomaten 4 montiert, daß der Schlitten 52 mit dem Greifer 2 sowohl bis zur obersten, als auch bis zur untersten Reihe der Regalfächer 13 bewegt werden kann. In diesem Zusammenhang wird darauf hingewiesen, daß die Länge und Anordnung der Schienen 41 und 42 mit den Zahnstangen 43 und 44 ebenfalls so bemessen ist, daß der Greifer 2 von der ersten bis zur letzten Reihe der senkrecht übereinanderliegenden Regalfächer 13 gefahren werden kann. Damit kann der Greifer 2 in zwei Koordinaten bewegt werden, nämlich in x-Richtung parallel zum Regal 3 und in z-Richtung entlang der Höhe des Regals. Zum Übertragen der Papierstapel von der Zuführstation 10 zu den einzelnen Regalfächern 13 ist ferner eine Bewegung des Greifers 2 in Richtung auf die Zuführstation 10 und von dieser weg erforderlich, also in FIGUR 4 in Richtung des Pfeils y. Um dies zu erreichen, ist der Schlitten 52 mit horizontalen Führungen 49 versehen, in denen das Traggestell 50 horizontal und damit in y-Richtung vor und zurück bewegt werden kann. Die Bewegungssteuerung erfolgt durch einen nicht dargestellten Hydraulikzylinder, dessen eines Ende am Schlitten 52 und dessen anderes Ende am Traggestell 50 befestigt ist. Es ist dem Fachmann klar, wie ein Hydraulikzylinder angeordnet sein muß, um diese Bewegung des Greifers 2 am Schlitten 52 durchführen zu können. Damit ist der Greifer 2 auch in der dritten Koordinatenrichtung bewegbar.

Einzelheiten des Greifers 2 sind in den FIGURen 6 bis 9 dargestellt, wobei gleiche Teile durchwegs mit gleichen Bezugzeichen versehen sind.

FIGUR 6 zeigt den Vorderteil des Greifers 2 in perspektivischer Darstellung, in der das Traggestell 50 lediglich angedeutet ist. Aus Gründen der Übersichtlichkeit ist außerdem die Verbindung des Traggestells 50 mit dem Schlitten 52 weggelassen.

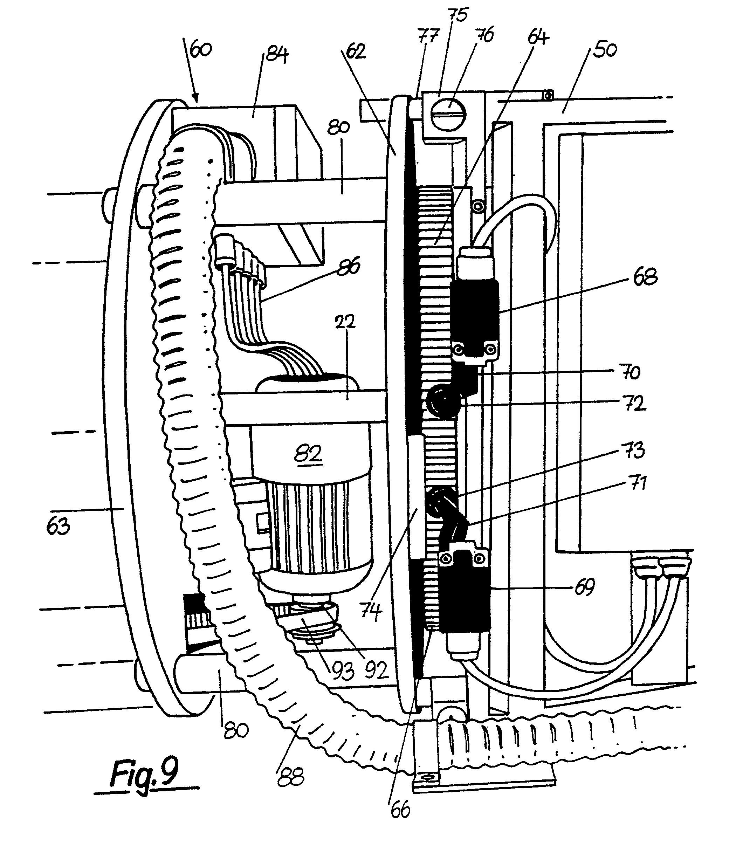

Der Greifer 2 ist im wesentlichen aus einer Zange 12 und einem Greiferkopf 60 aufgebaut. Der Greiferkopf 60 wird von zwei parallelen Scheiben 62 und 63 gebildet, die am Traggestell 50 drehbar montiert sind. Zu diesem Zweck ist die erste Scheibe 62 mit einem Zahnrad 64 verbunden, das in den FIGURen 4 und 9 deutlich erkennbar ist. Das Zahnrad 64 und die erste Scheibe 62 sitzen drehbar auf einem im Traggestell 50 gelagerten Zapfen. Auf diese Weise können das Zahnrad 64 und die erste Scheibe 62 gegenüber dem Traggestell 50 gedreht werden. Um diese Drehbewegung zu bewirken, kämmt ein Ritzel 66 mit dem Zahnrad 64. Das Ritzel 66 ist in der Vorderwand 65 des Traggestells 50 drehbar gelagert und wird von einem im Traggestell 50 angeordneten und in den FIGURen aus Gründen der Übersichtlichkeit nicht dargestellten Elektromotor angetrieben. Die Steuerung dieses Elektromotors erfolgt u.a. durch zwei Endschalter 68 und 69, deren Schaltarme 70 und 71 Rollen 72 und 73 tragen, die von Kurvenscheiben 74 betätigt werden. In FIGUR 9 ist nur eine Kurvenscheibe 74 in Form eines Teflonstücks dargestellt, das an der Seite der ersten Scheibe 62 des Greiferkopfs 60 angebracht ist, die dem Traggestell 50 zugewandt ist. Ein weiteres Kurvenscheibenstück ist an diametral gegenüberliegender Stelle der Scheibe 62, jedoch auf einem anderen, vorzugsweise kleineren Radius befestigt, so daß es nur mit der Rolle 72 des oberen Endschalters 68 in Berührung gelangt, die Rolle 73 des unteren Endschalters 69 jedoch nicht berührt, wenn der Greifer 2 um 180° gedreht wird. Die beiden Endschalter 68 und 69 dienen dazu, den das Ritzel 66 treibenden, nicht dargestellten Elektromotor immer dann auszuschalten, wenn die Zange 12 des Greifers 2 um 180° gedreht wurde. Um diese Drehbewegung in einer genau definierten Stellung enden zu lassen, sind an der Vorderwand 65 des Traggestells 50 Anschläge 75 angebracht, von denen nur der obere Anschlag 75 erkennbar ist. Der Anschlag 75 besitzt eine Stellschraube 76, gegen die ein an der Scheibe 62 angebrachter Vorsprung 77 schlägt. Es wird darauf hingewiesen, daß der untere, nicht dargestellte Vorsprung auf einem kleineren Radius der Scheibe 62 angebracht ist, so daß er bei einer Drehung des Greiferkopfes 60 unter dem oberen Anschlag 75 durchlaufen kann. Zweckmäßigerweise sind die Vorsprünge 77 mit Teflon beschichtet, um den harten Stoß beim Berühren der Anschläge 75 zu mindern.

Es wird ferner darauf hingewiesen, daß die Endschalter 68 und 69 außerdem bei jeder Betätigung ihrer Rollen 72 und 73 und Schaltarme 70, 71 die Drehrichtung des nicht dargestellten Elektromotors automatisch umkehren, so daß dieser bei jeder weiteren Aktivierung von der zentralen elektronischen Steuerung abwechselnd in die eine oder andere Drehrichtung dreht und damit den Greiferkopf 60 abwechselnd im Uhrzeigersinn und gegen den Uhrzeigersinn um 180° dreht, wie dies die Pfeile E und F in FIGUR 5 andeuten.

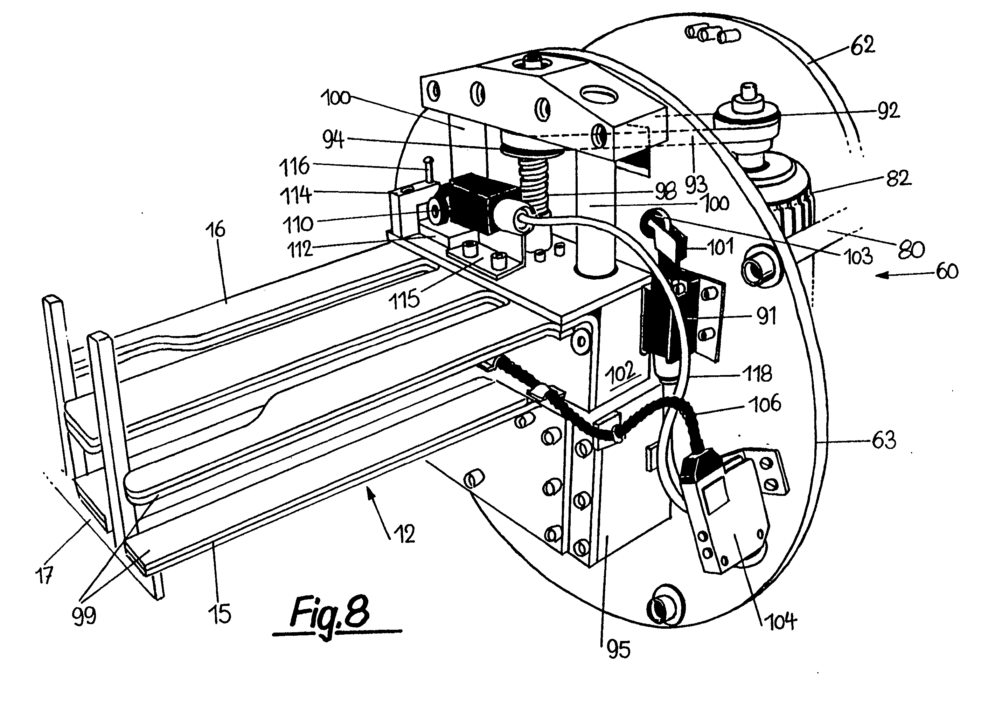

Die FIGUREn 6 und 9 zeigen außerdem, daß die erste und zweite Scheibe 62 und 63 durch Bolzen 80 im Abstand miteinander gehalten und außerdem miteinander verbunden sind. Der Abstand der beiden Scheiben 62 und 63 ist so bemessen, daß dazwischen ein weiterer Elektromotor 82 (FIGUR 9) montierbar ist, der zur Betätigung der Zange 12 (FIGUR 6) dient. Der Elektromotor 82 ist an der vorderen oder zweiten Scheibe 63 montiert, die außerdem ein Kabelverteilergehäuse 84 trägt. Von dem Kabelverteilergehäuse 84 führen Steuer- und Versorgungskabel 86 zum Elektromotor 82, die dem Kabelverteilergehäuse 84 durch einen verhältnismäßig dicken elastischen Kabelschlauch 88 zugeführt werden. Der Kabelschlauch 88 ist so flexibel, daß er eine Drehung des Greiferkopfes 60 mitmachen kann. In FIGUR 9 ist das Kabelverteilergehäuse 84 in der oberen Drehstellung des Greiferkopfes 60 gezeigt, wobei die Bewegung in die untere Drehstellung nach FIGUR. 6 oder 8 nur im Uhrzeigersinn erfolgen kann, da sonst der Kabelschlauch 88 abreißen würde. Um die Drehung des Greiferkopfes 60 nicht zu behindern, ist der Kabelschlauch 88 mit einer ersten Schelle 89 an einem Bolzen 80 des Greiferkopfes und mit einer zweiten Schelle 90 an einem Teil des Traggestells 50 befestigt.

In FIGUR 9 ist außerdem noch erkennbar, daß am unteren Ende des Elektromotors 82 ein Ritzel 92 auf dessen Abgabewelle aufgekeilt ist, welches einen Zahnriemen 93 treibt. Der Zahnriemen 93 läuft durch einen Schlitz in der zweiten Scheibe 63 nach vorn und außen, um die untere Backe 16 gegen die obere Backe 15 bewegen zu können.

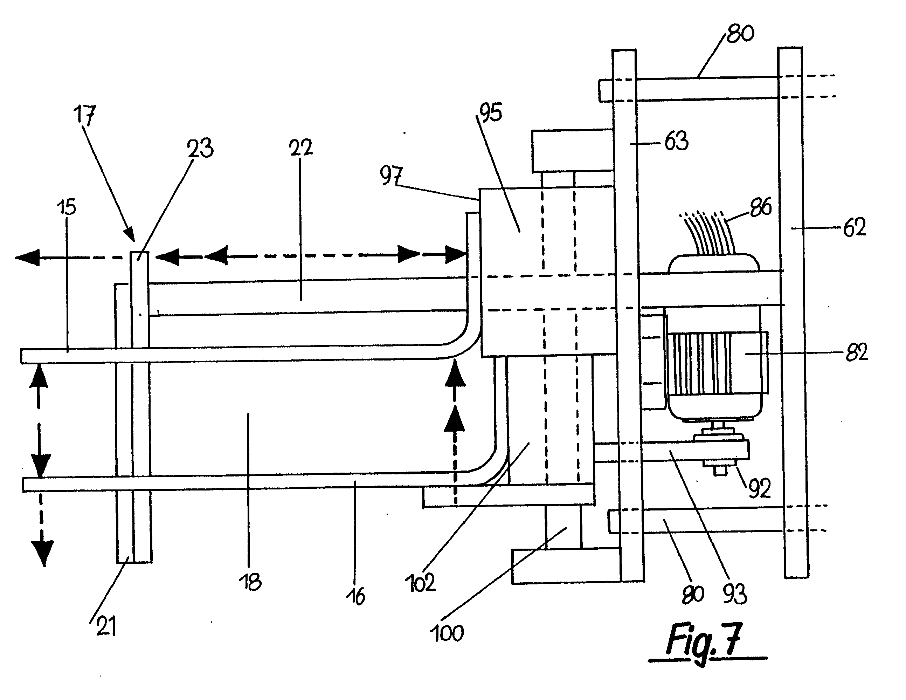

Die FIGUREn 6 und 7 lassen deutlich erkennen, daß die obere Backe 15 an der zweiten Scheibe 63 des Greiferkopfs 60 feststehend montiert ist, und zwar indem sie an die Stirnfläche eines U-förmigen Bügels 95 mit Hilfe von Schrauben 96 angeschraubt ist. Der Bügel 95 ist mit der zweiten Scheibe 63 von der Seite des Elektromotors 82 verschraubt. Die Stirnfläche 97 des Bügels 95 verläuft parallel, jedoch im Abstand zur ersten Scheibe 63, wobei der Abstand so gewählt ist, daß zwischen der Stirnfläche 97 des Bügels 95 und der zweiten Scheibe 63 zwei Führungsstangen 100 und ein Führungskörper 102 der unteren Backe 16 montierbar sind. Die obere Backe 15 hat im übrigen die Form eines liegenden L, dessen kurzer Schenkel am Bügel 95 befestigt ist und dessen langer Schenkel rechtwinkelig von der zweiten Scheibe 63 des Greiferkopfs 60 in der y-Richtung nach FIGUR 4 vorsteht.

5

Gemäß FIGUR 6 ist die obere Backe 15 in der dargestellten Ausführungsform aus einem mittleren Steg 15′ und zwei äußeren Stegen 15″ gebildet, die durch Längsschlitze 19 voneinander getrennt sind. Die Längsschlitze 19 erstrecken sich von der Spitze der oberen Backe 15 bis in die Nähe des Bügels 95 und damit bis in die Nähe ihres kurzen Schenkels. Etwa auf halber Länge des mittleren Stegs 15′ der oberen Backe 15 ist eine schräge Bohrung vorgesehen, in der ein Lichttaster 14 montiert ist. Der Lichttaster 14 ist in FIGUR 6 nach oben gerichtet, so daß er nicht in das Maul 18 (FIGUR 7) der Zange 12 blickt. Der Lichtleiter des Lichttasters 14 erstreckt sich im Inneren des mittleren Stegs 15′ der oberen Backe 15 und führt zu einem Optokoppler 104 (FIGUR 8), der das optische Signal vom Lichttaster 14 in ein elektrisches Signal umwandelt. Der Optokoppler 104 ist neben dem Bügel 95 an der zweiten Scheibe 63 des Greiferkopfs 60 montiert, wie man am besten anhand von FIGUR 8 erkennt. Der Lichtleiter 106 führt vom Optokoppler 104 in den mittleren Steg 15′ der oberen Backe 15, während das elektrische Kabel 108 in FIGUR 6 durch eine Bohrung in der zweiten Scheibe 63 in das Kabelverteilergehäuse 84 und damit in den Kabelschlauch 88 und von diesem zur elektronischen Steuerung geführt ist.

FIGUR 6 zeigt außerdem, daß die untere Backe 16 an dem Führungskörper 102 angebracht ist, in senkrechter Richtung mit der oberen Backe 15 im wesentlichen fluchtet und ebenfalls von einem mittleren Steg 16′ und zwei äußeren Stegen 16″ gebildet ist. Zwischen dem mittleren Steg 16′ und den äußeren Stegen 16″ sind wiederum Schlitze 19′ vorgesehen, die in senkrechter Richtung mit den Schlitzen 19 der oberen Backe 15 fluchten. Auf diese Weise können sich die Zinken 21 eines Ejektors 17 durch die fluchtenden Schlitze 19 und 19′ erstrecken und in den Schlitzen 19 und 19′ in y-Richtung vor und zurück bewegt werden. Hierzu sind die senkrechten Zinken 21 durch ein Querstück 23 oberhalb des mittleren Stegs 15′ der oberen Backe 15 und damit außerhalb des Mauls 18 miteinander verbunden. Eine Kolbenstange 22 trägt das Querstück 23. Die Kolbenstange 22 ist durch eine Bohrung 24 im Bügel 95, durch die zweite Scheibe 63, durch die erste Scheibe 62, durch das Zahnrad 64 und durch die Vorderwand 65 des Traggestells 50 geführt und weist an ihrem Ende einen nicht dargestellten Kolben auf, der in einem ebenfalls nicht dargestellten Hydraulikzylinder untergebracht ist, so daß die Kolbenstange 22 bei Betätigung des nicht dargestellten Hydraulikzylinders in Richtung zum vorderen Ende der Zange 12 gemäß FIGUR 7 bewegt oder in Richtung zum Bügel 95 zurückgezogen werden kann. Auf diese Weise stößt der Ejektor 17 im Maul 18 gehaltenes Papier aus und erleichtert dadurch das Ablegen von Papierstapeln in den Regalfächern 13.

Das Einklemmen von einzelnen Papierbögen bis zur Höhe eines Papierstapels im Maul 18 erfolgt nun in der Weise, daß der Elektromotor 82 von der elektronischen Steuerung angesteuert wird und mit seinem Zahnriemen 93 ein Zahnrad 94 dreht, welches an der Vorderseite der zweiten Scheibe 63 des Greiferkopfes 60 unter dem Bügel 95 montiert ist. Die Drehbewegung des Zahnrads 94 wird auf eine Schnecke 98 übertragen, welche die untere Backe 16 entlang den Führungsstangen 100 entweder in Richtung auf die obere Backe 15 oder von dieser weg bewegt. Dadurch wird das Maul 18 der Zange 12 entweder geöffnet oder geschlossen.

Es wird schließlich noch darauf hingewiesen, daß die Unterseite der oberen Backe 15 und die Oberseite der unteren Backe 16 in FIGUR 6 zweckmäßigerweise mit Schaumgummi 99 beschichtet sind, um Papierstapel weich und ohne Beschädigung aufnehmen zu können und um außerdem ein zu festes Schließen der Backen zu verhindern. Es wird ferner darauf hingewiesen, daß der Elektromotor 82 so gesteuert ist, daß bei Überschreiten eines bestimmten Antriebsdrehmoments die Stromzufuhr unterbunden wird. Auf diese Weise erfährt der Elektromotor 82, wann die Backen 15 und 16 einen Papierstapel hinreichend fest eingeklemmt haben.

Gemäß FIGUR 8 ist neben dem Bügel 15 in der Nähe des Optokopplers 104 ein dritter Endschalter 91 montiert, dessen Schaltarm 101 eine Rolle 103 trägt, die von dem Führungskörper 102 der unteren Backe 16 betätigt wird. Es wird erneut darauf hingewiesen, daß der Greiferkopf 60 in FIGUR 8 in gedrehter Stellung dargestellt ist, so daß die untere Backe 16 oben liegt. Der dritte Endschalter 91 dient dazu, den Elektromotor 82 abzuschalten, wenn das Maul der Zange 12 vollständig geöffnet ist. In dieser Stellung berührt der Führungskörper 102 die Rolle 103 des dritten Endschalters 91, wodurch dessen Schaltarm 101 geschwenkt wird und dadurch den Schalter öffnet oder schließt.

FIGUR 8 zeigt ferner noch einen Schleppschalter 110, der mit einem Schleppstück 112 und einem Galgen 114 zusammenarbeitet. Der Schleppschalter 110 ist durch ein Winkelblech 115 fest mit der unteren Backe 16 verbunden, so daß er bei einer Drehung der Schnecke 98 mit der unteren Backe 16 auf und ab bewegt wird. Das Schleppstück 112 ist hingegen gegenüber der unteren Backe 16 bewegbar und sitzt in leichtem Reibungseingriff auf einer der Führungsstangen 100. Der Reibungseingriff zwischen dem Schleppstück 112 und der Führungsstange 100 ist so bemessen, daß bei einer Bewegung des Führungskörpers 102 entlang der Führungsstange 100 das Schleppstück 112 zunächst an der Führungsstange 10 stehen bleibt, bis es an der Unterseite des Führungskörpers 102 in der in Figur 8 dargestellten Weise anliegt und von diesem mitgenommen wird. Das Schleppstück 112 ist in einer Ausführung eine Teflonplatte, die an einem Ende eine Buchse trägt, welche die zugehörige Führungsstange 100 umgibt. Der Schleppschalter 110 ist ein Ausschalter, der bei Betätigung durch das Schleppstück 112 den Elektromotor 82 abschaltet. An dem Führungskörper 102 ist ferner

6

EP 0 339 400 B1

der Galgen 114 angebracht, der im Abstand über das Schleppstück 112 greift und an seinem freien Ende eine Stellschraube 116 aufweist, die durch das freie Ende des Galgens 114 schraubbar ist und den Hub des Schleppstücks 112 zwischen dem Führungskörper 102 und dem Galgen 114 begrenzt. Der Galgen 114 dient dazu, das Schleppstück 112 mitzunehmen, wenn die untere Backe 16 in Richtung auf die obere Backe 15 bewegt wird, um die Zange 12 zu schließen und einen Papierstapel dazwischen einzuklemmen. Ohne die Mitnahme des Schleppstücks 112 durch den Galgen 114 würde das Schleppstück 112 voll auf die Rolle und den Schwenkarm des Schleppschalters 110 drücken und diesen beschädigen.

Die Funktion des Schleppschalters 110 ist folgende : Bei der Schließbewegung der Zange 12 nimmt der Galgen 114 das Schleppstück 112 mit, das in dieser Stellung den Schleppschalter 110 betätigt und ihn in die Schaltstellung "EIN" bringt. Dadurch wird der Elektromotor 82 zum Schließen der Zange 12 freigegeben und es kann ein Papierstapel eingeklemmt werden. Beim Öffnen der Zange 12 zum Ablegen eines Papierstapels bewegt sich zunächst der Führungskörper 102 von der oberen Backe 15 weg und damit in Richtung auf das Schleppstück 112, das aufgrund seiner größeren Reibung zunächst an der Führungsstange 100 stehen bleibt. Da der Galgen 114 und der Schleppschalter 110 auf dem gleichen Bauteil, nämlich dem Führungskörper 102 befestigt sind, hebt nicht nur die Stellschraube 116 des Galgens 114, sondern auch die Rolle des Schleppschalters 110 von dem Schleppstück 112 ab, so daß der Schleppschalter 110 in die Stellung "AUS" gelangt und einen Abschaltbefehl für den Elektromotor 82 über ein Kabel 118 an die nicht dargestellte elektronische Steuerung liefert. Auf diese Weise schaltet der Elektromotor 82 nach geringfügiger Öffnungsbewegung wieder ab. Diese geringe Öffnungsbewegung reicht aus, um einen Papierstapel freizugeben. Es wird dadurch aber außerdem erreicht, daß die einzelnen Regalfächer 13 nicht so hoch zu sein brauchen, daß in der maximalen Beladungsstellung noch eine vollständige Öffnung des Zangenmauls im Regalfach durchführbar ist.

FIGUR 10 zeigt das vordere Übergabeenede der Zuführstation 10 ohne Papierstapel und bei der Annäherung des Greifers 2.

Man erkennt, daß die Ketten 30 und 31 unter der Oberfläche des Tisches 32 geführt sind und daß die Transportstücke 25 unter der Abdeckung 36 durchlaufen. Zu beiden Seiten der Zuführketten 30 und 31 sind außerdem Leitbleche 35 vorgesehen, welche den Papierstapel zum Vorderende der Zuführstation 10 führen.

Am Vorderende der Zuführstation 10 ist der Tisch 32 so unterbrochen, daß die Backen 16 des Greifers 2 senkrecht durch diesen bewegbar sind. Zu diesem Zweck ist die Tischfläche am Vorderende so ausgeschnitten, daß zwei Fortsätze 28 und 29 einen Abstand haben, der dem Abstand der Schlitze 19' in der Zange 12 entspricht (FIGUR 6). Außerdem ist die Breite der Fortsätze 28 und 29 geringer als die Breite der Schlitze 19' am vorderen Ende der unteren Backe 16, so daß die Stege 16' und 16" der unteren Backe 16 von unten nach oben durch die Ebene der Tischfläche des Tisches 32 bewegt werden können.

## Arbeitsweise

Einzelne, bedruckte und mit einem Strichcode versehene Papierbögen werden vom Drucker einer großen EDV-Anlage über die Förderbänder 6 und 6' des Bogenanlegers 1 den in FIGUR 2 dargestellten Lesestationen 11 zugeführt. In den Lesestationen 11 werden die Blätter vereinzelt und der aufgedruckte Strichcode wird gelesen. Solange sich der Strichcode nicht ändert, werden die einzelnen Blätter zwischen dem gleichen Paar von Transportstücken 25, 25' in der Zuführstation 10 von FIGUR 3 abgelegt. Sobald jedoch eine Lesestation 11 eine Änderung des Strichcodes erkennt, fördern die Ketten 30 und 31 der Zuführstation 10 den abgelegten Papierstapel weiter, bis dieser schließlich zum Vorderende des Tisches 32 in FIGUR 10 gelangt.

Der Greifer 2 wird zur Übertragung jedes Papierstapels von der Zuführstation 10 in eines der Regalfächer 13 des Regals 3 über dem Vorderende der Zuführstation 10 derart in Stellung gebracht, daß bei vollständig geöffnetem Maul 18 die untere Backe 16 etwas unterhalb von der Tischfläche des Tisches 32 liegt (FIGUR 10). Der Ejektor 17 wird dabei ganz in Richtung auf die Scheibe 63 des Greifkopfes 60 zurückgezogen, so daß das Maul 18 vollkommen geöffnet ist. Auf diese Weise fördern die Transportstücke 25, 25' der Ketten 30 und 31 den Papierstapel in das Maul 18 der Zange 12, das daraufhin durch Aktivierung des Elektromotors 82 (FIGUR 7) geschlossen wird. Hierauf wird der Greifer 2 am Schlitten 52 des Handhabungsautomaten 4 (FIGUR 4) entgegen der Richtung y zurückgezogen, während gleichzeitig der Greiferkopf 60 (FIGUR 5) im Uhrzeigersinn (F) um 180° gedreht wird. Auf diese Weise wird die Oberseite der oberen Backe 15 der Zange 12 zu einer unteren Bezugsebene für das Ansteuern eines Regalfachs 13 in der Stellung gemäß FIGUR 8. Da die elektronische Steuerung die Beladehöhe der einzelnen Regalfächer 13 gespeichert hat, wird der Greifer 2 an dem Handhabungsautomaten 4 so weit hochgefahren, wie dies der Fachhöhe plus der Beladehöhe entspricht. Gleichzeitig fährt der Handhabungsautomat 4 in x-Richtung an die richtige senkrechte Regalfachspalte.

Da nun das richtige Regalfach in x- und z-Richtung ausgewählt wurde, kann der Greifer 2 in y-Richtung in das Regalfach 13 bewegt werden. Dabei ermittelt der nunmehr nach unten gerichtete Lichttaster 14 (FIGUR 6), wie hoch der tatsächliche Beladestand des angesteuerten Regalfaches 13 ist, denn Papierentnahmen aus

7

einem Regalfach erfolgen von Hand und werden dem Papierhöhenspeicher daher nicht eingegeben. Wenn tatsächlich eine Papierentnahme erfolgt sein sollte und der Greifer 2 daher den abzulegenden Papierstapel an sich zu hoch hält, so erfolgt automatisch eine Nachsteuerung nach unten, die den Greifer 2 am Handhabungsautomaten 4 so weit absenkt, bis der Lichttaster 14 ein entsprechendes Steuersignal liefert, welches der Zange 12 anzeigt, daß sie den Papierstapel nur wenige Millimeter über dem Fachboden oder dem obersten Blatt eines zuletzt abgelegten Papierstapels hält.

Wenn diese Position erreicht ist, wird der Elektromotor 82 in entgegengesetztem Sinne zu der unmittelbar zuvor erfolgten Betätigung angesteuert, so daß die Zange 12 öffnet und die untere Backe 16 nach oben bewegt wird. Kurz danach setzt eine Relativbewegung zwischen dem Ejektor 17 und dem Greifer 2 in der Weise ein, daß die Kolbenstange 22 mit der gleichen Geschwindigkeit ausgefahren wird, wie das Zurückziehen der Zange 12 aus dem Regalfach 13 erfolgt. Auf diese Weise bleiben die Zinken 21 des Ejektors 17 während des Zurückziehens der Zange 12 ortsfest stehen und verhindern ein Herausrutschen des Papierstapels aus dem Regalfach 13.

Sobald die Zange 12 vollständig aus dem Regalfach 13 zurückgezogen ist, wird auch die Kolbenstange 22 des Ejektors 17 wieder eingefahren und der Greifer 2 kehrt zum Vorderende der Zuführstation 10 gemäß FIGUR 10 zurück. Auf diesem Wege wird der Greiferkopf 60 wieder um 180° gedreht, jedoch diesmal gegen den Uhrzeigersinn (E), um wieder in die in den FIGURen 1, 4, 5, 6, 7, 9 und 10 dargestellte Position zu gelangen und für die Aufnahme eines nächsten Papierstapels bereit zu sein.

Es wird darauf hingewiesen, daß auch Abwandlungen der dargestellten Ausführungsform in den Schutzbereich der Patentansprüche fallen. So kann der Schlitten 52 an einem Drehtisch montiert sein, der entlang der Führungsstangen 40 von FIGUR 4 auf und ab bewegbar ist. Durch Verwendung eines Drehtisches kann der Greifer 2 sowohl ein linkes, als auch ein rechtes Regal 3 bedienen, indem das Traggestell 50 mit dem Greifer in der Vertikalebene um 180° geschwenkt werden. Zweckmäßigerweise schützen Lichtschranken bei jeder Ausführungsform Bedienungspersonal davor, in den Bewegungsbereich des Greifers 2 oder des Handhabungsautomaten 4 zu gelangen, indem beim Durchbrechen einer jeweiligen Lichtschranke die erfindungsgemäß Papierverteilungsvorrichtung abgeschaltet wird. Die Anordnung und Steuerung derartiger Lichtschranken ist dem Fachmann geläufig.

## Patentansprüche

1. Papierverteilungsvorrichtung für das automatische Ablegen von Papierstapeln in einzelnen Fächern eines Regals (3), mit mindestens einem Förderband (6), einem Handhabungsautomaten (4) und einer elektronischen Steuerung, **dadurch gekennzeichnet,**

— daß an das mindestens eine Förderband (6) eine Zuführstation (10) anschließt, in der einzelne Papierbögen oder am Rand verklebte Papierstapel als vom Förderband (6) zugeführte Stapel ablegbar sind ;

— daß ein am Handhabungsautomaten (4) angeordneter Greifer (2) an das Ende der Zuführstation (10) elektronisch gesteuert positionierbar ist ;

— daß der Greifer (2) eine Zange (12) zum Erfassen und Übernehmen einzelner Papierblätter oder Papierstapel von der Zuführstation (10) aufweist ;

— daß der Greifer (2) mit einem Lichttaster (14) zur Ermittlung der Beschickung jedes angesteuerten Regalfachs (13) versehen ist ;

— daß der Greifer (2) mit einem Antrieb zum Umdrehen der Zange (12) um 180° versehen ist, wobei das Umdrehen der Zange (12) bei der Übertragung von der Zuführstation (10) zu einem Regalfach (13) erfolgt;

— daß der Handhabungsautomat (4) entlang dem Regal (3) automatisch gesteuert verfahrbar ist ;

— daß der Greifer (2) an dem Handhabungsautomaten (4) auf und ab bewegbar ist ; und

— daß die Zange (12) des Greifers (2) durch eine automatische elektronische Steuerung in die Regalfächer (13) hinein und aus diesen heraus bewegt werden kann.

2. Vorrichtung nach Anspruch 1, **dadurch gekennzeichnet,** daß die Zange (12) des Greifers (2) eine feststehende obere Backe (15) und eine gegen die obere Backe (15) bewegbare untere Backe (16) besitzt.

3. Vorrichtung nach Anspruch 2, **dadurch gekennzeichnet,** daß die einander zugewandten Innenseiten der oberen Backe (15) und der unteren Backe (16) mit Schaumgummi (99) beschichtet sind.

4. Vorrichtung nach Anspruch 2 oder 3, **dadurch gekennzeichnet,** daß die beiden Backen (15, 16) zwei zueinander parallele, im wesentlichen ebene Flächen sind, die Längsschlitze (19, 19') aufweisen.

5. Vorrichtung nach Anspruch 4, **dadurch gekennzeichnet,** daß die beiden Backen (15, 16) jeweils aus einem mittleren Steg (15', 16') und zwei äußeren Stegen (15'', 16'') gebildet sind, wobei die äußeren Stege (15'', 16'') von den mittleren Stegen (15', 16') durch je einen Längsschlitz (19, 19') getrennt sind, und daß die Längsschlitze (19, 19') senkrecht übereinander fluchtend angeordnet sind.

6. Vorrichtung nach einem der Ansprüche 1 bis 5, **dadurch gekennzeichnet, daß** der Lichttaster (14) auf der Oberseite der oberen Backe (15) angeordnet ist.

7. Vorrichtung nach Anspruch 6, **dadurch gekennzeichnet,** daß der Lichttaster (14) auf dem mittleren Steg (15') der oberen Backe (15) etwa auf halber Länge davon angeordnet ist.

8. Vorrichtung nach einem der Ansprüche 1 bis 7, **dadurch gekennzeichnet,** daß der Greifer (2) mit einem Ejektor (17) versehen ist.

9. Vorrichtung nach Anspruch 8, **dadurch gekennzeichnet,** daß der Ejektor (17) in das von den Backen (15, 16) gebildete Maul (18) greift und in dem Maul (18) parallel zur Längserstreckung der Backen (15, 16) bewegbar ist.

10. Vorrichtung nach Anspruch 8 oder 9, **dadurch gekennzeichnet,** daß der Ejektor (17) die Form eines Rechens hat, dessen Zinken (21) durch ein Querstück (23) verbunden sind und sich durch die Längsschlitze (19, 19') der Backen (15, 16) erstrecken, während eine Kolbenstange (22) außerhalb des Mauls (18) und über der oberen Backe (15) an dem Querstück (23) befestigt und parallel zu der oberen Backe (15) ein- und ausfahrbar ist.

11. Vorrichtung nach Anspruch 1, **dadurch gekennzeichnet,** daß die Zuführstation (10) ein Paar endloser, im Abstand zueinander verlaufender Ketten (30, 21) mit im Abstand eingesetzten Transportstücken (25, 25') aufweist.

12. Vorrichtung nach Anspruch 11, **dadurch gekennzeichnet,** daß die Ketten (30, 31) in einem Tisch (32) montiert sind, dessen vorderes Ende Schlitze (26) aufweist, durch die die Stege (16', 16") der unteren Backe (16) des Greifers (2) vertikal bewegbar sind.

13. Vorrichtung nach Anspruch 1, **dadurch gekennzeichnet,** daß ein Schleppschalter (110) die Öffnungsbewegung der Zange (12) begrenzt.

## Claims

1. A paper distribution device for automatically depositing piles of paper into individual compartments of shelving (3), with at least one conveyor belt (6), a manipulating automaton (4) and an electronic control system, **characterised in that**

— a feed station (10), in which individual sheets of paper or piles of paper sealed at the edges can be deposited in piles supplied by the conveyor belt (6), is connected to at least one conveyor belt ;

— a gripping device (2) disposed on the manipulating automaton (4) can be positioned on the end of the feed station (10) by electronic control ;

— the gripping device (2) has a clamp (12) to grasp and to transfer single sheets of paper or piles of paper from the feed station (10) ;

— the gripping device (2) is provided with a light sensor (14) to register the load of each shelving compartment (13) approached thereby ;

— the gripping device (2) is provided with a drive to rotate the clamp (12) by 180°, with the rotation of the clamp (12) occurring during the transfer from the feed station (10) to a shelving compartment (13) ;

— the manipulating automaton (4) can be moved along the shelving (3) under automatic control ;

— the gripping device (2) can be moved up and down on the manipulating automaton (4) ; and

— the clamp (12) of the gripping device (2) can be moved by an automatic electronic control into and out of the shelving compartments (13).

2. A device according to Claim 1, **characterised in that** the clamp (12) of the gripping device (2) has a fixed upper jaw (15) and a lower jaw (16) which can be moved towards the upper jaw (15).

3. A device according to Claim 2, **characterised in that** the inner facing sides of the upper jaw (15) and of the lower jaw (16) are coated wit sponge rubber (99).

4. A device according to Claim 2 or 3, **characterised in that** the two jaws (15, 16) are two parallel, essentially flat surfaces, which comprise longitudinal slots (19, 19').

5. A device according to Claim 4, **characterised in that** the two jaws (15, 16) are each formed from a central arm (15', 16') and two outer arms (15", 16"), with the outer arms (15", 16") being separated from the central arms (15', 16') by a longitudinal slot (19, 19'), and in that the longitudinal slots (19, 19') are disposed in vertical alignment over one another.

6. A device according to one of Claims 1 to 5, **characterised in that** the light sensor (14) is disposed on the upper side of the upper jaw (15).

7. A device according to Claim 6, **characterised in that** the light sensor (14) is disposed roughly midway along the central arm (15') of the upper jaw (15).

8. A device according to one of Claims 1 to 7, **characterised in that** the gripping device (2) is provided with an ejector (17).

9. A device according to Claim 8, **characterised in that** the ejector (17) reaches into the mouth (18) formed by the jaws (15, 16) and can be moved in the mouth (18) parallel to the longitudinal extension of the jaws (15, 16).

10. A device according to Claim 8 or 9, **characterised in that** the ejector (17) has the form of a rake, the prongs (21) of which are connected by a cross-piece (23) and extend through the longitudinal slots (19, 19' ;) of the jaws (15, 16), while a piston rod (22) is attached outside the mouth (18) and above the upper jaw (15) to the cross-piece (23) and can be driven in and out parallel to the upper jaw (15).

11. A device according to Claim 1, **characterised in that** the feed station (10) comprises a pair of spaced apart endless chains (30, 31) with transporting cheeks (25, 25') attached at intervals thereto.

12. A device according to Claim 11, **characterised in that** the chains (30, 31) are mounted in a table (32), the front end of which has slots (26) through which the arms (16', 16") of the lower jaw (16) of the gripping device (2) can be vertically moved.

13. A device according to Claim 1, **characterised in that** a trailing switch (110) limits the opening movement of the clamp (12).

## Revendications

1. Dispositif de distribution de papier en vue du rangement automatisé de piles de papier dans les casiers individuels d'un rayonnage (3), avec au moins une bande transporteuse (6), un automate de manutention (4) et une commande électronique, **caractérisé en ce que**
— à au moins une bande transporteuse (6) se raccorde un poste d'amenée (10) dans lequel des feuilles de papier ou des piles de papier au bord collé peuvent être enlevées par la bande transporteuse (6) sous forme de piles ;
— un dispositif de saisie (2) installé sur l'automate de manutention (4) peut être positionné par commande électronique à l'extrémité du poste d'amenée (10) ;
— le dispositif de saisie (2) présente une pince (12) en vue de rassembler et de reprendre des feuilles individuelles de papier hors du poste d'amenée (10) ;
— le dispositif de saisie (2) est équipé d'un détecteur lumineux (14) en vue de la transmission du chargement de chaque casier de rayonnage (13) ;
— le dispositif de saisie (2) est équipé d'un entraînement en vue de la rotation sur 180° de la pince (12), la rotation de la pince (12) s'effectuant lors du transfert entre le poste d'amenée (10) et un casier de rayonnage (13) ;
— l'automate de manutention (4) est déplaçable par commande automatique le long du rayonnage (3) ;
— le dispositif de saisie (2) sur l'automate de manutention (4) est mobile vers le haut et vers le bas et
— la pince (12) du dispositif de saisie (2) peut être déplacée par une commande électronique automatique vers l'intérieur et vers l'extérieur des casiers du rayonnage (13).

2. Dispositif selon la revendication 1, **caractérisé en ce que** la pince (12) du dispositif de saisie (2) possède une mâchoire supérieure (15) fixe et une mâchoire inférieure (16) qui peut se déplacer contre la mâchoire supérieure (15).

3. Dispositif selon la revendication 2, **caractérisé en ce que** les faces intérieures se déplaçant l'une vers l'autre de la mâchoire supérieure (15) et de la mâchoire inférieure (16) sont recouvertes de mousse de caoutchouc (99)

4. Dispositif selon la revendication 2 ou 3, **caractérisé en ce que** les deux mâchoires (15, 16) sont deux surfaces essentiellement planes et parallèles l'une à l'autre, qui présentent des fentes longitudinales (19, 19').

5. Dispositif selon la revendication 4, **caractérisé en ce que** les deux mâchoires (15, 16) sont toutes deux formées d'une plaque centrale (15', 16') et de deux plaques extérieures (15", 16"), les plaques extérieures (15", 16") étant chaque fois séparées des plaques centrales (15', 16') par des fentes longitudinales (19, 19'), les fentes longitudinales (19, 19') s'étendant parallèlement l'une au-dessus de l'autre.

6. Dispositif selon l'une des revendications 1 à 5, **caractérisé en ce que** le détecteur lumineux (14) est disposé sur la face supérieure de la mâchoire supérieure (15)

7. Dispositif selon la revendication 6, **caractérisé en ce que** le détecteur lumineux (14) est disposé sur la plaque centrale (15') de la mâchoire supérieure (15), environ au milieu de la longueur de celle-ci

8. Dispositif selon l'une des revendications 1 à 7, **caractérisé en ce que** le dispositif de saisie (2) est équipé d'un éjecteur (17)

9. Dispositif selon la revendication 8, **caractérisé en ce que** l'éjecteur (17) s'insère dans l'espace (18) formé entre les mâchoires (15, 16) et est dans l'espace (18) déplaçable parallèlement au sens de la longueur des mâchoires (15, 16).

10. Dispositif selon la revendication 8 ou 9, **caractérisé en ce que** l'éjecteur (17) possède la forme d'un râteau dont les dents (21)sont reliées par une pièce transversale (23) et s'étendent à travers les fentes longitudinales (19, 19') des mâchoires (15, 16) un piston (22) étant fixé à la pièce transversale (23) à l'extérieur de l'espace (18) et au-dessus de la mâchoire supérieure (15) et pouvant se déplacer vers l'intérieur et l'extérieur parallèlement à la mâchoire supérieure (15).

11. Dispositif selon la revendication 1, **caractérisé en ce que** le poste d'amenée (10) présente une paire de chaînes (30, 31) sans fin, s'étendant à distance l'une de l'autre, avec des pièces de transport (25, 25') insérées à écartement.

12. Dispositif selon la revendication 11, **caractérisé en ce que** les chaînes (30, 31) sont montées dans une table (32) dont l'extrémité avant présente une fente (26) à travers laquelle les plaques (16', 16") de la mâchoire inférieure (16) du dispositif de saisie (2) peuvent se mouvoir dans le sens vertical.

13. Dispositif selon la revendication 1, **caractérisé en ce** qu'un contacteur à glissement (110) limite le mouvement d'ouverture de la pince (12).

Fig.1

*Fig.2*

_Fig.3_

*Fig. 4*

_Fig.5_

*Fig.6*

Fig.7

EP 0 339 400 B1

Fig.8

EP 0 339 400 B1

Fig.9

Fig.10